# EUROPEAN PATENT APPLICATION

(11) **EP 2 154 056 A2**
(43) Date of publication of application: **17.02.2010**
(21) Application number: 09009761.9
(22) Date of filing: 28.07.2009
(51) Int. Cl.: B62K 15/00

(54) **Foldable frame for a bicycle**

(30) Priority: 29.07.2008 TW 97128671
(71) Applicant: Steenstra, Alphons, Taichung City 402 (TW)
(72) Inventor: Steenstra, Alphons, Taichung City 402 (TW)
(74) Representative: Altenburg, Bernardus Stephanus Franciscus

(57) **Abstract**

A foldable frame (10), a separating member (15), and a bicycle (1) thereof are disclosed. The foldable frame (10) is connected with a front wheel (21) and a rear wheel (22) of the bicycle (1). The foldable frame (10) and the separating member (15) can be used for folding the bicycle (1) to align the axle centers of the front wheel (21) and the rear wheel (22), which is useful for a user to carry the bicycle (1).

## Description

### TECHNICAL FIELD

The present invention relates to a foldable frame, separating member and bicycle thereof, and particularly to a foldable bicycle with extensible frame and having the separated pedal support rod and the rear wheel support rack.

### BACKGROUND OF THE INVENTION

The folded bicycle has been developed for many years. All the manufacturers make their best efforts to compact as much as possible the occupied space in the folded manner.

Generally speaking, the development of folded bicycle is for the convenience of users to carry. It provides the convenience that the public transportation cannot meet with, especially the more flexible transportation for users in personal traffic. This requirement is particularly obvious for the white-collar workers in transportation or the students going and leaving school. Because the public transportation may not directly arrive at the destination, the foldable bicycle can provide the substantial convenience.

The currently available foldable bicycles on the market are designed based on the folded volume. In fact, however, the users usually carry the foldable bicycles by dragging. Thus, the size of folded volume may not be the key design issue of the user, but the user will focus on if the folded bicycle is suitable for dragging. Therefore, if there is a foldable bicycle designed for convenient dragging, there should be provided with excellent convenience for the users.

### SUMMARY OF INVENTION

The major objective of the present invention is to provide a bicycle and a frame thereof, which can change the length of the frame, so as to align the axle centers of a front wheel and a rear wheel, which is useful for users to carry the bicycle.

Another objective of the present invention is to provide a bicycle and the separating members, which can separate a pedal support rod and a rear wheel support rack of a bicycle.

In order to achieve the above objectives, the present invention provides a bicycle, a frame thereof and separating members. The bicycle according to the present invention comprises a front wheel, a rear wheel, and a frame. The frame is respectively connected with the front wheel and the rear wheel. The present invention further provides an embodiment of a frame, which comprises a rod body, a rotation portion, an extension member, and a fixing member, wherein the rotation portion and the extension member are located on the rod body. The extension member is configured to extend or shorten the length of the rod body, and the rotation portion can make the extension member folded along the rotation portion. The fixing member is connected with the extension member, and the fixing member is configured to make the extension member being fixed on the rod body. Thus, when the extension member extends the rod body and makes the extension member folded along the rotation portion, the axle center of the front wheel and the axle center of the rear wheel are aligned together.

The extension member provided in the present invention comprises a stopper, an outer tube, and an adjustable tube. The stopper and the outer tube are located on the rod body. The adjustable tube is located inside the outer tube. One end of the adjustable tube is connected with the rotation portion, so that the adjustable tube may extend or shorten the length of the rod body, and employing the fixing member to fix the outer tube at the stopper of the rod body.

In one embodiment, the outer tube comprises a first guide portion, and the first guide portion is located on the inner wall of the outer tube. The adjustable tube comprises a second guide portion, and the second guide portion is corresponded to the first guide portion. The adjustable tube is located inside the outer tube, and one end of the adjustable tube is fixed at the stopper, so that the adjustable tube is retracting correspondingly to the outer tube and moving along the first and second guide portions. Thus, the adjustable tube extends or shortens the length of the rod body. The fixing member is configured to fix the outer tube at the stopper.

In this embodiment, the rod body further comprises a lock button, and the lock button can control at least one portion of the adjustable tube being located within the outer tube.

In one embodiment, the rotation portion is a shaft. In different embodiments, the rotation portion may also be a spring or a flexible body, or the rotation portion may even be a chain to make the extension member rotating relative to the rod body.

The present invention also provides separating members, which can separate a support rod and a support rack, for example, but not limited to, for separating the pedal support rod and the rear wheel support rack of the bicycle. The separating members comprise a control part, a fastening part, and a flexible fixing assembly. The fastening part includes an opening, and the fastening part is connected with the support rack. The control part is passed through the flexible fixing assembly, and making the flexible fixing assembly fixed at the support rod, so as to control whether the fastening part can be released from the flexible fixing assembly through the opening.

Preferably, the flexible fixing assembly further comprises a curved surface control body, a first fixing portion, a flexible body and a second fixing portion. The control part is passed through the curved surface control body. The first fixing portion comprises a first head and a first tube. The first tube is extended from the first head, and the first head is accommodated with a portion of the curved surface control body. The diameter of the first head is larger than the opening of the fastening part, and the diameter of the first tube is smaller than the opening, so as to make the first tube passing through the opening. The second fixing portion comprises a groove, a second head and a second tube, in which the second tube substantially fixes the flexible fixing assembly with the support rod, and the second tube is extended from the second head. The diameter of the second head is larger than the opening of the fastening part. The fastening part comprises a first engaged portion, and the first head comprises a second engaged portion. The first engaged portion and the second engaged portion are corresponding to each other, so that the fastening part can be engaged with the first head. And, the groove is accommodated with the flexible body and a portion of the first tube, so that the flexible body is located between the first tube and the groove and employing the flexibility provided by the flexible body to make the fastening body releasing from the flexible fixing assembly. The flexible body provides the flexibility to make the first fixing portion being displaced, so as to control the fastening part being released from the flexible fixing assembly through the opening.

### BRIEF DESCRIPTION OF DRAWINGS

FIG. 1 shows a front view of a bicycle based on an embodiment according to the present invention;

FIG. 2 shows a front view after a rod body being extended according to FIG. 1;

FIG. 2A shows a partially enlarged view of a frame according to FIG. 2;

FIG. 3 shows a front view after an extended rod body being folded according to FIG. 2;

FIG. 4A shows a cross-sectional view of an outer tube along 4A-4A line according to FIG. 2A;

FIG. 4B shows a cross-sectional view of an outer tube along 4B-4B line according to FIG. 2A;

FIG. 5A and 5B show different embodiments for an extension member according to the present invention;

FIG. 6 shows an exploded drawing for a separating member according to the present invention;

FIG. 6A shows a 3-D drawing after being assembled according to FIG. 6; and,

FIG. 7A and 7B show front views for different embodiments of a frame in the present invention.

### DETAILED DESCRIPTION OF PREFERRED EMBODIMENTS

In order to make the aforementioned and other objects, features and advantages of the present invention to be more comprehensive, the following will describe in details by enumerating the preferred embodiments in connection with the attached drawings.

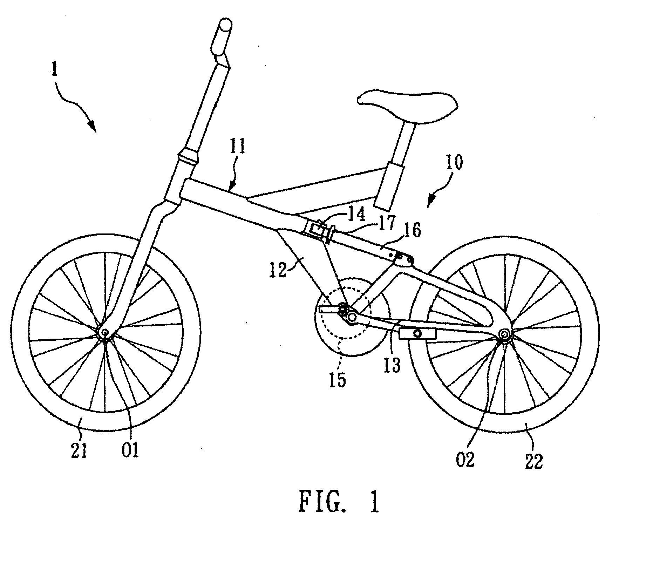

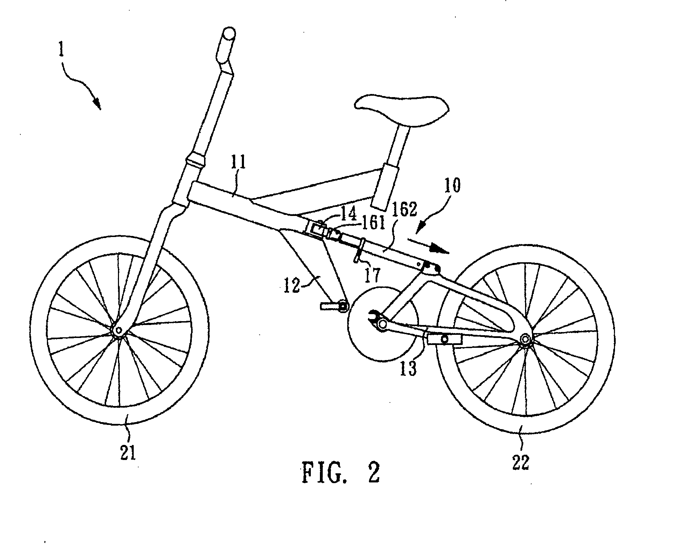

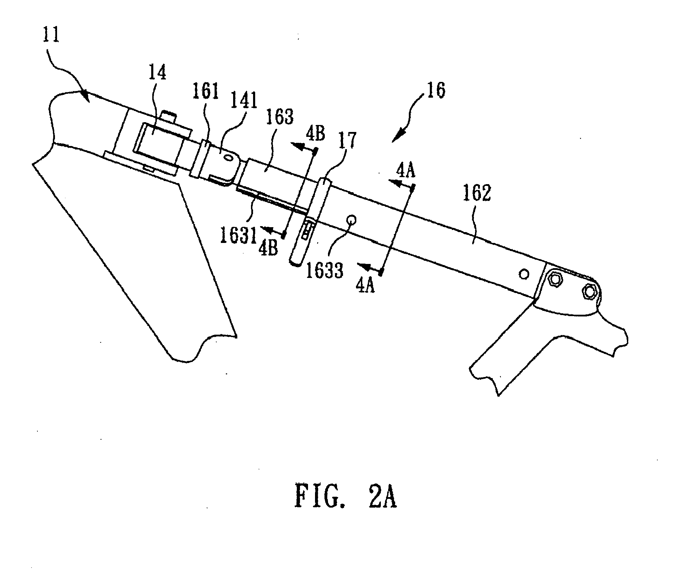

The present invention discloses a bicycle, a frame thereof, and the separating member. Referring to FIG. 1, a bicycle 1 comprises a front wheel 21, a rear wheel 22 and a frame 10. The frame 10 is respectively connected with the front wheel 21 and the rear wheel 22. The present invention further provides an embodiment of the frame 10, which comprises a rod body 11, a rotation portion 14, an extension member 16, and a fixing member 17; wherein the rotation portion 14 and the extension member 16 are located on the rod body 11. The extension member 16 can extend or shorten the length of the rod body 11, as shown in FIG. 2. The fixing member 17 is connected with the extension member 16, and the fixing member 17 can fix the extension member 16 with the rod body 11. For example, the fixing member 17 may be a C-shaped clip. The rotation portion 14 may be a shaft or a circular, multi-angle rotation portion. Moreover, the frame 10 according to the present invention can be designed with more than one rotation portions 14 according to different folding angles, as shown in FIG. 2A, which can employ the design of the extension member 16 to add an extension shaft 141 for the rotation portion 14. Thus, the present invention does not limit the structure or quantity of the rotation portion 14 or extension shaft 141.

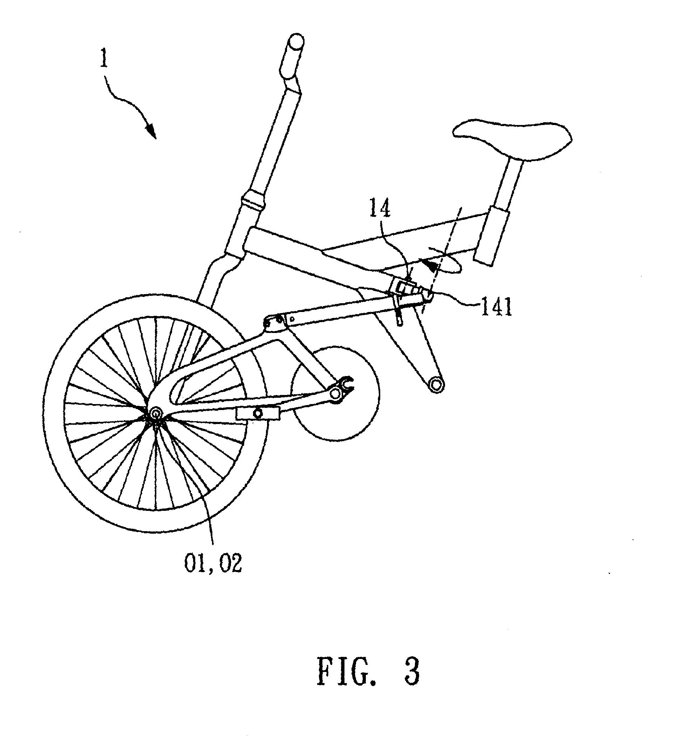

Please refer to FIG. 3. The rotation portion 14 can make the extension member 16 being folded along the rotation portion 14. Thus, when the extension member 16 extends the rod body 11, and after folding the extension member 16 along the rotation portion 14, the axle center O1 of the front wheel 21 and the axle center 02 of the rear wheel 22 are aligned to each other. Therefore, the user can directly drag the bicycle 1 very easily after folding.

The front frame and/or the seat rack of the bicycle 1 can also be designed as folded type. Although not shown, the skilled in the art can understand that the overall size after folding can be shortened. Furthermore, for the design of the frame 10 according to the present invention, although the rod body 11 is shown as a horizontal rod, it actually can be the vertical rod body of the front frame. And, the rotation portion 14, the extension member 16 and the fixing member 17 can be designed at the vertical rod body of the front frame, so that the handle can be extended to be folded as well. Thus, the present invention is not limited to the structure/design shown in the figures.

Referring to both FIG. 2 and 2A, it further describes an embodiment of the operation of the extension member 16 according to the present invention for extending the rod body 11. The extension member 16 comprises a stopper 161, an outer tube 162 and an adjustable tube 163. The stopper 161 and the outer tube 162 are located on the rod body 11. The adjustable tube 163 is located within the outer tube 162, and one end of the adjustable tube 163 is connected with the rotation portion 14, so that the adjustable tube 163 can extend or shorten the length of the rod body 11. And, the fixing member 17 can fix the outer tube 162 with the stopper 161 of the rod body 11. When the user needs to extend the rod body 11, he/she only needs to release the fixing member 17 and move the outer tube 162 along the direction of the arrow, as shown in FIG. 2, and then the adjustable tube 163 can be pulled out from the outer tube 162 to extend the length of the rod body 11. However, the skilled in the art can appreciated that the position of the stopper 161 shown in the figure is not intended to limit the present invention. The stopper 161 can also be located on the other side of the rotation portion 14, so that the outer tube 162 can envelope the rotation portion 14. The present invention describes the extension member 16 with the aforementioned preferred embodiment, but not limiting the present invention. The extension member 16 may have all kinds of possible implementations. For example, the extension member 16 may only employ a screw bolt moving within a slot (not shown) to achieve the same objective of extension.

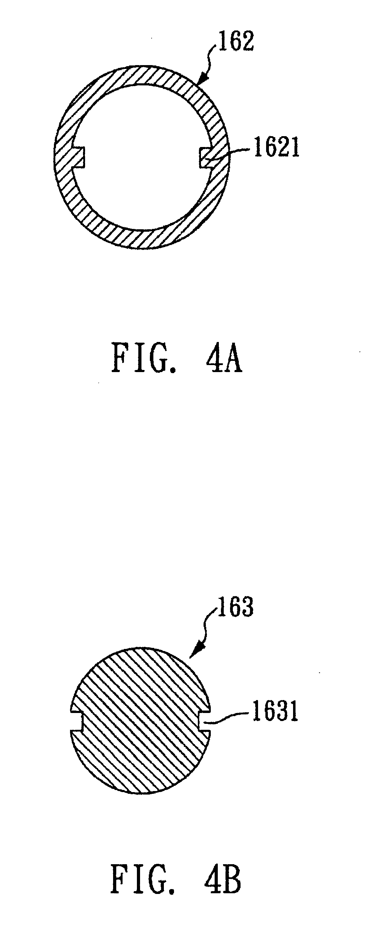

In one embodiment, please refer to FIG. 2A, FIG. 4A and 4B. FIG. 4A and 4B are respectively the cross-sectional views of an outer tube 162 and an adjustable tube 163. The outer tube 162 comprises a first guide portion 1621, and the first guide portion 1621 is located on the inner wall of the outer tube 162. And, the adjustable tube 163 comprises a second guide portion 1631, and the second guide portion 1631 is corresponding to the first guide portion 1621. The adjustable tube 163 is located within the outer tube 162, and one end of the adjustable tube 163 is fixed with the stopper 161. Thus, the adjustable tube 163 can be retracted corresponding to the outer tube 162 and moved along the first and second guide portions 1621, 1631, so as to extend or shorten the length of the rod body 11. However, the skilled in the art can appreciated that the structures of the outer tube 162 and the adjustable tube 163 are not limited as shown in the figure. For example, the outer tube 162 and the adjustable tube 163 can be designed as triangle or the like, and the quantity or shape of the guide portion is not limited to the figure as shown. The embodiment only describes that the user can conveniently move the adjustable tube 163 and the outer tube 162 with the design of the guide portion.

In the present embodiment, the rod body 11 further comprises a lock button 1633. The lock button 1633 can control at least one portion of the adjustable tube 163 being located within the outer tube 162.

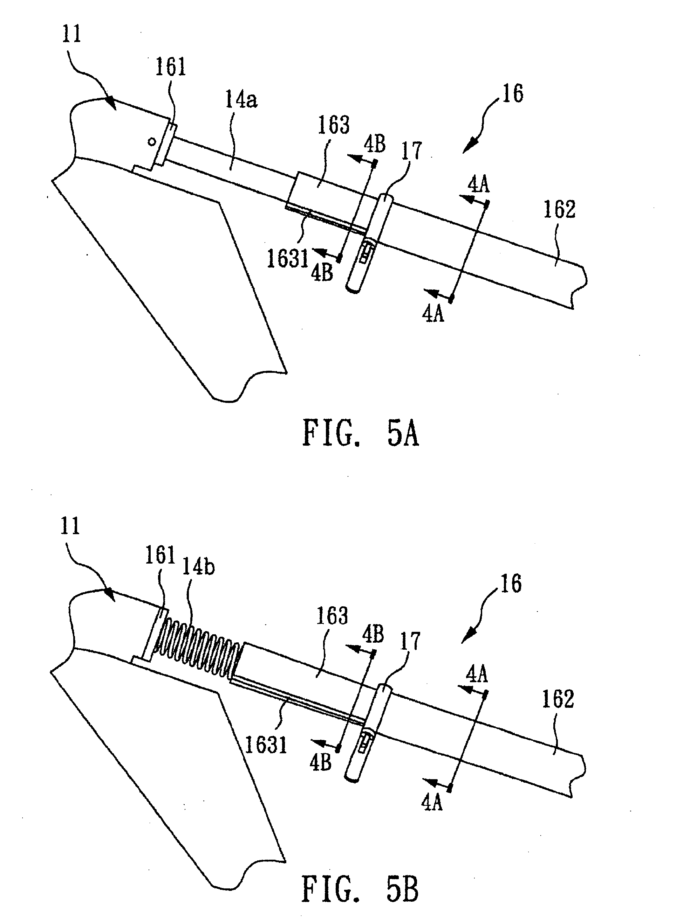

In the present embodiment, the rotation portion 14 shown in FIG. 2A is a shaft. However, in other embodiments, referring to FIG. 5A and 5B, the rotation portions 14a, 14b can also be spring or flexible member, or even the rotation portion may be a chain for rotating the extension member 16 relative to the rod body 11.

The present invention also provides a separating member 15, which can separate, for example, a support rode from a support rack, but not limited to, separating the pedal support rod 12 from the rear wheel support rack 13 of the bicycle 1 as shown in FIG. 1. That is, the separating member 15 of the present invention can be applied to any one rod on the frame. For convenience, the following description uses the pedal support rod 12 and the rear wheel support rack 13 for example.

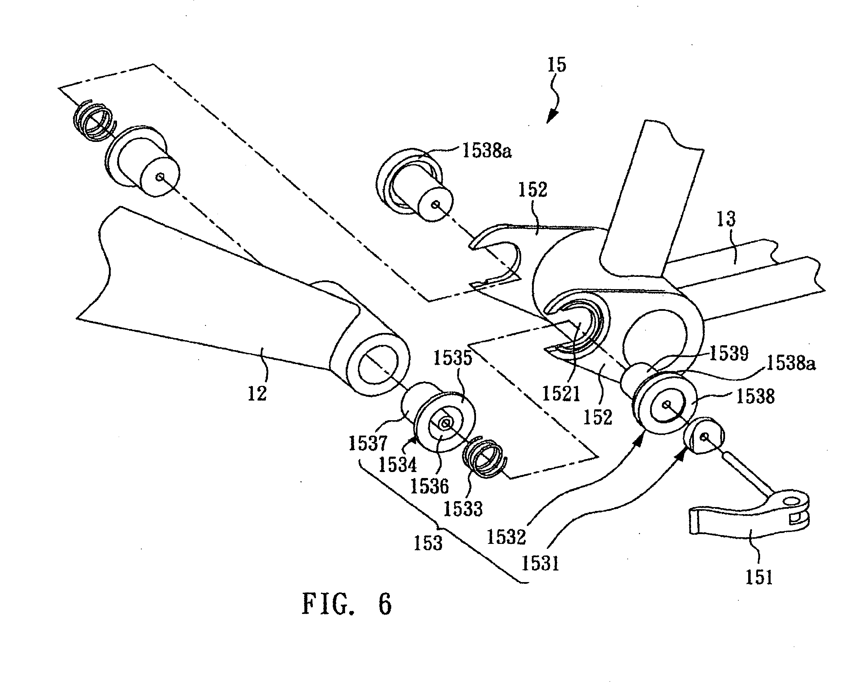

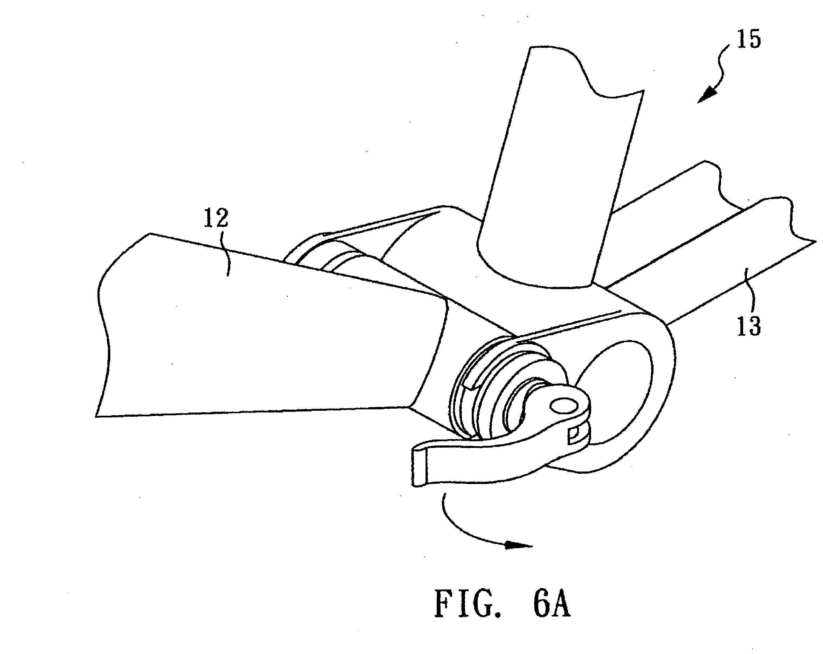

Referring to both FIG. 6 and 6A, the separating member 15 comprises a control part 151, a fastening part 152 and a flexible fixing assembly 153. The fastening part 152 comprises an opening 1521, and the fastening part 152 is connected with the support rack 13. The control part 151 is passed through the flexible fixing assembly 153 and makes the flexible fixing assembly 153 fixed with the support rod 12, so as to control whether the fastening part 152 can be released from the flexible fixing assembly 153 through the opening 1521.

Furthermore, the flexible fixing assembly 153 further comprises a curved surface control body 1531, a first fixing portion 1532, a flexible body 1533 and a second fixing portion 1534. The control part 151 is passed through the curved surface control body 1531. The first fixing portion 1532 comprises a first head 1538 and a first tube 1539. The first tube 1539 is extended from the first head 1538, and the first head 1538 is accommodated with a portion of the curved surface control body 1531. The diameter of the first head 1538 is larger than the opening 1521 of the fastening part 152, and the diameter of the first tube 1539 is smaller than the opening 1521, so that the first tube 1539 is passed through the opening 1521 and the first head 1538 is fixed above the opening 1521. The second fixing portion 1534 comprises a groove 1536, a second head 1535 and a second tube 1537. The second tube 1537 is substantially to fix the flexible fixing assembly 153 with the support rod 12. The second tube 1537 is extended from the second head 1535, and the diameter of the second head 1535 is larger than the opening 1521 of the fastening part 152. The fastening part 152 comprises a first engaged portion 152a, and the first head 1538 comprises a second engaged portion 1538a, so that the fastening part 152 is engaged with the first head 1538.

The groove 1536 is accommodated with the flexible body 1533 and a portion of the first tube 1539, so that the flexible body 1533 is located between the first tube 1539 and the groove 1536. When the user pulls or releases the control part 151, the flexible body 1533 provides the flexibility to make the first fixing portion 1532 displaced, so as to control whether the fastening part 152 can be released from the flexible fixing assembly 153 through the opening 1521. As shown in FIG. 6A, the user only needs to move the control part 151 along the direction of the arrow, he/she can separate the pedal support rod 12 from the rear wheel support rack 13.

Therefore, in a preferred embodiment, referring back to FIG. 1, the frame according to the present invention can also comprise the aforementioned separating member 15. When the rod body 11 is extended, it can employ the separating member 15 to separate the pedal support rod 12 from the rear wheel support rack 13, and further to fold the frame 10 through the rotation portion 14. Moreover, the separating member 15 according to the present invention is not limited to the structure/design shown in the figures. In other words, the separating member 15 can also be designed for other parts, such as separating the seat from the frame 10. Furthermore, the quantity of the flexible fixing assembly 153 is not used to limit the present invention. Although there are two sets of flexible fixing member assemblies 153 shown in the figure, as described above, actually one set of flexible fixing assembly 153 can achieve the purpose of separation in the present invention.

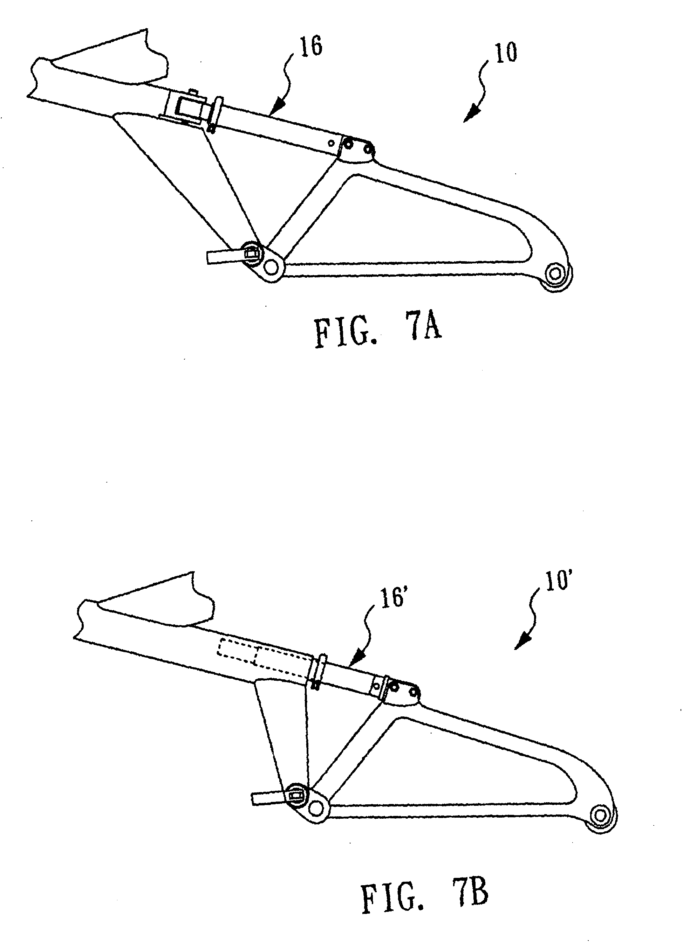

It is further emphasized that the present invention is not limited to the structure/design shown in the figures. For example, referring to FIG. 7A and 7B, the frame 10 according to the present invention can also configure the extension member 16 anywhere. The extension member 16 may be fully exposed, or half exposed (not shown). Furthermore, although the terms in the present invention defines multiple "tubes," the skilled in the art can appreciated that they are not intended to limit the present invention for circular tube, the triangular, rectangular or other like shapes can also achieve the same function.
Although the present invention has been disclosed with preferred embodiments as above, they are not intended to limit the present invention. The skilled in the art can make somewhat variation and modification without departing from the spirit and scope of the present invention. Thus, the protection scope of the present invention should be defined by the attached claims as follows.

## Claims

1. A frame for applying with a bicycle comprising a front wheel and a rear wheel, wherein the frame is connected with the front wheel and the rear wheel, and the frame comprising:
a rod body;
a rotation portion, which is located on the rod body;
an extension member located on the rod body for extending or shortening a length of the rod body, wherein the rotation portion can make the extension member being folded along the rotation potion; and,
a fixing member connected with the extension member, wherein the fixing member is configured to fix the extension member with the rod body.

2. The frame according to claim 1, wherein the extension member further comprises:
a stopper located on the rod body;
an outer tube located on the rod body;
a adjustable tube located inside the outer tube;
wherein one end of the adjustable tube is connected with the rotation portion, and the adjustable tube can extend or shorten the length of the rod body; and
wherein the fixing member can fix the outer tube with the stopper.

3. The frame according to claim 1, wherein the extension member further comprises:
a stopper located on the rod body;
an outer tube located on the rod body, wherein the outer tube comprises a first guide portion, and the first guide portion is located on the inner wall of the outer tube;
a adjustable tube located inside the outer tube, wherein the adjustable tube comprises a second guide portion, and the second guide portion is corresponding to the first guide portion, so that the adjustable tube can be moved corresponding to the outer tube; and
wherein one end of the adjustable tube is fixed with the stopper, so that the adjustable tube can extend or shorten the length of the rod body, and the fixing member can fix the outer tube with the stopper.

4. The frame according to any of the preceding claims, wherein the rod body further comprises a lock button, and the lock button can control at least one portion of the adjustable tube within the outer tube.

5. The frame according to any of the preceding claims, when the extension member extends the rod body and after making the extension member folded along the shaft, the axle center of the front wheel and the axle center of the rear wheel are aligned with each other.

6. The frame according to any of the preceding claims, wherein the fixing member is a C-shaped clip.

7. The frame according to any of the preceding claims, further comprising:
a pedal support rod having one end connected with the rode body;
a separating member connected with the other end of the pedal support rode; and
a rear wheel support rack respectively connected with the rod body and the separating member, and when the extension member extends the rod body and the extension member is folded along the rotation portion, the separating member can make the pedal support rod separated from the rear wheel support rack.

8. The frame according to claim 7, wherein the separating member further comprises:
a control part;
a fastening part connected with the rear wheel support rack, wherein the fastening part comprises an opening; and
a flexible fixing assembly;
wherein the control part is passed through the flexible fixing assembly and making the flexible fixing assembly fixed with the pedal support rod, so as to control whether the fastening part can be released from the flexible fixing assembly through the opening.

9. The frame according to claim 8, wherein the flexible fixing assembly further comprises:
a curved surface control body passed through the curved surface control body;
a first fixing portion comprising a first head and a first tube, wherein the first tube is extended from the first head, the diameter of the first head is larger than the opening of the fastening part, and the diameter of the first tube is smaller than the opening; whereby the first tube passes through the opening, and the first head is accommodated with a portion of the curved surface control body;
a flexible body providing flexibility to make the control part employing the curved surface control body to displace the first fixing portion; and,
a second fixing portion comprising a groove, a second head, and a second tube; wherein the second tube is extended from the second head, and the diameter of the second head is larger than the opening of the fastening part; wherein the fastening part comprises a first engaged portion, and the first head comprises a second engaged portion;
wherein the first engaged portion and the second engaged portion are corresponding to each other, so that the fastening part is engaged at the first head, and the groove is accommodated with the flexible body and a portion of the first tube, so that the flexible body is located between the first tube and the groove, and the flexibility of the flexible body can make the fastening body released from the flexible fixing assembly.

10. A separating member for applying with a bicycle comprising a pedal support rod and a rear wheel support rack, wherein the separating member can separate the pedal support rod from the rear wheel support rack, and the separating member comprising:
a control part;
a fastening part connected with the rear wheel support rack, wherein the fastening part comprises an opening; and,
a flexible fixing assembly;
wherein the control part is passed through the flexible fixing assembly and making the flexible fixing assembly fixed with the pedal support rod, so as to control whether the fastening part can be released from the flexible fixing assembly through the opening.

11. The separating member according to claim 10, wherein the flexible fixing assembly further comprises:
a curved surface control body passed through the curved surface control body;
a first fixing portion comprising a first head and a first tube, wherein the first tube is extended from the first head, the diameter of the first head is larger than the opening of the fastening part, and the diameter of the first tube is smaller than the opening; whereby the first tube passes through the opening, and the first head is accommodated with a portion of the curved surface control body;
a flexible body providing flexibility to make the control part employing the curved surface control body to displace the first fixing portion; and,
a second fixing portion comprising a groove, a second head, and a second tube; wherein the second tube is extended from the second head, and the diameter of the second head is larger than the opening of the fastening part; wherein the fastening part comprises a first engaged portion, and the first head comprises a second engaged portion;
wherein the first engaged portion and the second engaged portion are corresponding to each other, so that the fastening part is engaged at the first head, and the groove is accommodated with the flexible body and a portion of the first tube, so that the flexible body is located between the first tube and the groove, and the flexibility of the flexible body can make the fastening body released from the flexible fixing assembly.

12. A bicycle comprising:
a front wheel and a rear wheel;
a frame, and the frame is respectively connected with the front wheel and the real wheel, and the frame comprises:
a rod body;
a rotation portion, which is located on the rod body;
an extension member, which is located on the rod body to extend or shorten the length of the rod body, and the rotation portion can make the extension member folded along the rotation potion; and,
a fixing member, which is connected with the extension member, and the fixing member is configured to fix the extension member with the rod body;
when the extension member extends the rod body and after making the extension member folded along the rotation portion, the axle center of the front wheel and the axle center of the rear wheel are aligned to each other.

13. The bicycle according to claim 12, wherein the frame further comprises:
a pedal support rod having one end connected with the rode body;
a separating member connected with the other end of the pedal support rode; and
a rear wheel support rack respectively connected with the rod body and the separating member, and when the extension member extends the rod body and the extension member is folded along the rotation portion, the separating member can make the pedal support rod separated from the rear wheel support rack.

14. The bicycle according to claim 13, wherein the separating member further comprises:
a control part;
a fastening part, which is connected with the rear wheel support rack, and the fastening part includes an opening; and,
a flexible fixing assembly, in which the control part is passed through the flexible fixing assembly, and making the flexible fixing assembly fixed with the pedal support rod, so as to control whether the fastening part can be released from the flexible fixing assembly through the opening
